# EUROPÄISCHE PATENTSCHRIFT

(11) **EP 3 482 147 B1**
(45) Veröffentlichungstag und Bekanntmachung des Hinweises auf die Patenterteilung: **20.01.2021**
(21) Anmeldenummer: 17748648.7
(22) Anmeldetag: 05.07.2017
(51) Int. Cl.: F28D 20/00

(54) **VERFAHREN ZUR THERMOCHEMISCHEN ENERGIESPEICHERUNG**
METHOD FOR THERMO-CHEMICAL ENERGY STORAGE
PROCÉDÉ DE STOCKAGE D'ÉNERGIE THERMOCHIMIQUE

(30) Priorität: 11.07.2016 AT 3272016
(43) Veröffentlichungstag der Anmeldung: 15.05.2019
(73) Patentinhaber: Technische Universität Wien, 1040 Wien (AT); Akademie Der Bildenden Kuenste Wien, 1010 Wien (AT)
(72) Erfinder: MUELLER, Danny, 1080 Wien (AT); KNOLL, Christian, 1100 Wien (AT); WEINBERGER, Peter, 3422 Altenberg (AT); WERNER, Andreas, 2000 Stockerau (AT)
(74) Vertreter: Ellmeyer, Wolfgang
(86) Internationale Anmeldenummer: PCT/EP2017/066753
(87) Internationale Veröffentlichungsnummer: WO 2018/011032

(56) Entgegenhaltungen:
- EP-A1- 2 483 536
- US-A- 5 441 716
- US-A1- 2015 020 993

## Beschreibung

Die vorliegende Erfindung betrifft ein Verfahren zur thermochemischen Energiespeicherung mittels Durchführung endothermer chemischer Reaktionen zur Speicherung von Wärmeenergie in Form von chemischer Energie in einer oder mehreren chemischen Verbindungen zur späteren erneuten Freisetzung in Form von Wärmeenergie unter Durchführung chemischer Gleichgewichtsreaktionen von Amminkomplexen von Übergangsmetallsalzen Ein Verfahren gemäß dem Oberbegriff des Anspruchs 1 ist z.B. aus US 5 441 716 bekannt.

### STAND DER TECHNIK

Thermochemische Energiespeicherung, d.h. die Speicherung von Wärmeenergie in Form von chemischer Energie, ist eine seit Jahrzehnten bekannte, aber erst seit wenigen Jahren intensiver erforschte Methode der Energiespeicherung unter Zyklisierung zumindest einer chemischen Verbindung zwischen den Zuständen zumindest einer reversiblen Gleichgewichtsreaktion. US-Patent 4.365.475 offenbart beispielsweise die Verknüpfung zweier Gleichgewichtsreaktionen zum Zwecke der thermochemischen Energiespeicherung, nämlich die abwechselnde reversible endotherme Bildung der beiden Amminkomplexe CaCl2.8NH₃ und ZnCl₂.NH₃.

Generell lassen sich die für die thermochemische Energiespeicherung geeigneten Reaktionen in zwei Kategorien einteilen, nämlich die Kategorie der "Sorptionsprozesse", bei denen die Hauptvalenzen der beteiligten chemischen Verbindungen unverändert bleiben und nur über Nebenvalenzen koordinative Bindungen eingangen werden, wie bei den oben zitierten Reaktionen zu Amminkomplexen, aber z.B. auch zu Hydraten und anderen Solvaten, wie z.B. Hydraten, sowie die Kategorie der "chemischen Reaktionen" unter Änderung der Hauptvalenzen. In beiden Fällen kommen aufgrund der relativ hohen Anzahl an Koordinationsstellen bzw. Oxidationszuständen vorwiegend Metallsalze zum Einsatz.

In der Literatur beschriebene Systeme aus beiden Kategorien sind etwa BaO/BaO₂ (Fahim et al., Chem. Eng. Journal 27(1), 21-28 (1983)), CuO/Cu₂O (Chadda et al., Int. J. Energy Res. 13, 63 (1989), PbO/PbCO₃ (Kato et al., Prog. Nucl. Energy 32(3-4), 563-570 (1998)), MgO/Mg(OH)₂ (Aphane et al., J. Therm. Anal. Calorim. 96(3), 987-992 (2009)), CaO/Ca(OH)₂ (Schaube et al., Thermochim. Acta 538(0), 9-20 (2012)), sowie diverse Salzhydrate wie z.B. MgSO₄/MgSO₄.7H₂O (Ferchaud et al., JPCS 395(1), 12069 (2012)). Diese befinden sich jedoch hinsichtlich ihrer Entwicklung noch in einem sehr frühen Stadium und sind von einer praktischen oder wirtschaftlichen Anwendung zumindest größtenteils noch Jahre entfernt.

Als Systeme unter Verwendung von Amminkomplexen sind neben dem bereits erwähnten, aus US-Patent 4.365.475 bekannten Paar CaCl₂.8NH₃ und ZnCl₂.NH₃ auch andere Kombinationen bekannt, bei denen jedoch durchwegs zwischen unterschiedlichen Koordinationszuständen der Amminkomplexe gewechselt wird. Beispiele sind etwa eine Kombination der beiden Chloride CaCl₂ und FeCl₂, mit denen gemäß US-Patent 4.319.627 die folgenden Reaktionen durchgeführt werden:

CaCl₂.8NH₃ ⇄ CaCl₂.4NH₃ + 4 NH₃

FeCl₂.2NH₃ + 4 NH₃ ⇄ FeCl₂.6NH₃

oder eine weitere Kombination mit Calciumchlorid, nämlich CaCl₂ und MnCl₂, die gemäß Li et al., AIChE J. 59(4), 1334-1347 (April 2013), die in analoger Weise zur obigen Kombination mit Eisenchlorid die folgenden Reaktionen durchlaufen:

CaCl₂.8NH₃ ⇄ CaCl₂.4NH₃ + 4 NH₃

MnCl₂.2NH₃ + 4 NH₃ ⇄ MnCl₂.6NH₃

Als weiteres Beispiel für Amminkomplexe eines Übergangsmetallchlorids offenbaren Aidoun und Ternan, Appl. Therm. Eng. 21, 1019-1034 (2001), die Verwendung von Cobaltchlorid gemäß folgender Gleichung:

CoCl₂.2NH₃ + 4 NH₃ ⇄ CoCl₂.6NH₃

Die Energiespeicherdichte der oben genannten Systeme ist in den meisten bekannten Fällen allerdings eher gering, und die Korrosivität mancher der eingesetzten Salze stellt häufig ein apparatetechnisches Problem dar. Zusätzlich bereiten jedoch der Transport und die Lagerung der eingesetzten Metallsalze Probleme, da oftmals die bei der exothermen Reaktion erreichten Temperaturen nahe dem Schmelzpunkt der Salze bzw. Komplexe oder sogar darüber liegen, so dass zumindest ein Teil der jeweiligen Salze schmilzt, was zu Verklumpung führt.

Dazu kommt, dass bei allen bekannten Systemen zur thermochemischen Energiespeicherung die Qualität des eingesetzten Wärmespeichermaterials mit zunehmender Anzahl der Zyklen abnimmt, so dass dieses entweder ausgetauscht oder mitunter aufwändig gereinigt werden muss. Eine solche Qualitätsminderung kann einerseits aus unvollständiger Umsetzung, z.B. aufgrund der Ausbildung einer unreaktiven Schicht an der Oberfläche des Wärmespeichermaterials, und andererseits aufgrund von Veränderungen der mechanischen Eigenschaften der Feststoffpartikel, z.B. durch Abrieb, Sinterung usw., resultieren, was jeweils mit einer Abnahme der Wärmespeicherkapazität, d.h. der Energiespeicherdichte, gleichzusetzen ist. Beispielsweise haben Ishitobi et al. (J. Chem. Eng. Japan 45(1), 58-63 (2012)) für das System MgO/Mg(OH)₂ nach 105 Zyklen eine Abnahme von 30 % belegt.

Ziel der Erfindung war vor diesem Hintergrund die zumindest teilweise Lösung der obigen Probleme.

### OFFENBARUNG DER ERFINDUNG

Dieses Ziel erreicht die vorliegende Erfindung durch Bereitstellung eines Verfahrens zur thermochemischen Energiespeicherung mittels Durchführung reversibler chemischer Reaktionen zur Speicherung von Wärmeenergie in Form von chemischer Energie in einer oder mehreren chemischen Verbindungen zur späteren erneuten Freisetzung in Form von Wärmeenergie unter Nutzung von chemischen Gleichgewichtsreaktionen, wobei zur Speicherung und Wiederfreisetzung der Energie Gleichgewichtsreaktionen von Amminkomplexen von Übergangsmetallsalzen durchgeführt werden, das dadurch gekennzeichnet ist, dass
a) Amminkomplexe von Übergangsmetallsalzen gemäß der folgenden reversiblen Summenreaktionen gebildet und zersetzt werden:

   [Me(NH₃)ₙ]X + ΔH_{R} ⇄ MeX + n NH₃

   oder in alternativer Schreibweise:

   MeX.nNH₃ + ΔH_{R} ⇄ MeX + n NH₃

   worin Me für zumindest ein Übergangsmetallion und X für ein oder mehrere Gegenionen in einer zur Neutralisierung des Komplexes ausreichenden Menge, entsprechend ihrer Wertigkeit und jener des Übergangsmetallions, steht; und
b) ein oder mehrere Übergangsmetallsalze auf einem gegenüber der Reaktion inerten Trägermaterial eingesetzt werden.

Im Gegensatz zu den eingangs zitierten Systemen wird gemäß vorliegender Erfindung lediglich die Amminkomplex-Bildungsreaktion des zumindest einen Übergangsmetallsalzes anstelle einer Kombination zweier paralleler, einander chemisch oder thermodynamisch ergänzender Reaktionen durchgeführt. Das heißt, es wird nicht zwischen unterschiedlichen Koordinationszahlen der Amminkomplexe hin und her gewechselt, sondern vielmehr bei der exothermen Reaktion die gesamte Bildungsenthalpie der Amminkomplexe gewonnen. Die Erfinder haben nämlich herausgefunden, dass Übergangsmetall-Amminkomplexe sehr hohe Bildungsenthalpien aufweisen. Dies könnte zwar zu den oben genannten Problemen im Zusammenhang mit zumindest teilweisem Schmelzen der Salze bzw. Komplexe führen. Die Erfindung löst diese Problematik jedoch durch die Aufbringung der Metallsalze auf einen Träger, womit gleichzeitig eine "Verdünnung" der Salze erzielt wird, so dass Schmelzvorgänge und ein damit verbundenes Verklumpen der Salze ausgeschlossen sind. Die auf den Träger aufgebrachten Übergangsmetallsalze bleiben vielmehr auch bei höheren Temperatur weiterhin gut handhabbar. Bei der erfindungsgemäß bevorzugten Verwendung eines teilchenförmigen Trägers bleibt das Material beispielsweise rieselfähig und kann dadurch weiterhin auf einfache Weise transportiert und gelagert werden. Sowohl dadurch als auch aufgrund der Tatsache, dass es speziell bei Chloriden und anderen Salzen flüchtiger Säuren - im Gegensatz zum Stand der Technik unter Verwendung der nicht immobilisierten Salze - auf dem Träger kaum zu irreversibler Zersetzung der Salze kommt, wird die Lebensdauer des als Energieträger dienenden Materials durch die vorliegende Erfindung deutlich erhöht.

Das zumindest eine Übergangsmetall ist dabei vorzugsweise aus Mn, Fe, Co, Ni, Cu und Cd ausgewählt, da Amminkomplexe von Salzen dieser Metalle bei der exothermen Reaktion, d.h. der "Rückreaktion" in obiger Reaktionsgleichung, besonders hohe Bildungsenthalpien aufweisen und somit große Wärmemengen pro Masseneinheit freisetzen und zudem relativ kostengünstig erhältlich sind.

In besonders bevorzugten Ausführungsformen ist das zumindest eine Übergangsmetall aus Cu und Cd, insbesondere Cd, ausgewählt, da diese beiden Metalle im erfindungsgemäßen Verfahren gegenüber den übrigen Übergangsmetallen vorteilhafte Wärmebilanzen aufweisen. Einerseits zeigen Kupfersalze bei der Komplexierung mit Ammoniak sehr hohe Bildungsenthalpien und setzen daher selbst nach "Verdünung" auf Aufbringung auf den Träger sehr hohe Wärmemengen frei. Und andererseits sind Amminkomplexe von Cadmiumsalzen völlig überraschenderweise sogar durch einfaches Spülen mit Luft zersetzbar-gegebenenfalls unter zusätzlichem Erhitzen auf relativ niedrige Temperaturen, um die ohnehin schon hohe Reaktionsgeschwindigkeit zu steigern. Dadurch braucht bei Einsatz von Cadmium in einem Zyklus der obigen Hin- und Rückreaktion kaum Wärme investiert zu werden. Vielmehr kann eine beträchtliche Wärmemenge gewonnen werden, weswegen Cadmiumsalze, insbesondere CdCl₂, auch zur Verwendung in einem Verfahren zur Gewinnung von thermischer aus chemischer Energie geeignet sind - und das auch ohne sie auf einen Träger aufzubringen.

Als Gegenionen X werden gemäß vorliegender Erfindung vorzugsweise ein Sulfation SO₄²⁻ oder zwei Chloridionen Cl⁻ eingesetzt, da diese Salze einerseits gut erforscht und uneingeschränkt erhältlich sind und andererseits hohe Bildungsenthalpien der Amminkomplexe aufweisen. Dazu kommt, dass die Sulfate - im Gegensatz zu den Chloriden - selbst beim Erhitzen auf sehr hohe Temperaturen von über 600 °C keine irreversible Zersetzung erfahren, während die Chloride tendenziell höhere Bildungsenthalpien bei der Komplexierung mit Ammoniak aufweisen als die Sulfate. Beides ist, ohne sich auf eine bestimmte Theorie festlegen zu wollen, wohl auch durch begründet, dass die Chloride in der Lage sind, fünf Ammoniak-Moleküle zu koordinieren, die Sulfate hingegen nur vier.

In besonders bevorzugten Ausführungsformen werden als Übergangsmetallsalz daher das Sulfat oder Chlorid von Kupfer oder Cadmium oder ein Gemisch zweier oder mehrerer davon eingesetzt, wobei insbesondere CuSO₄ und CdCl₂ bevorzugt werden. Die Verwendung von Gemischen zweier oder mehrerer Übergangsmetallsalze - auf demselben oder auf getrennten Täger(partikel)n - kann in manchen Fällen bevorzugt sein, um beispielsweise die bei der exothermen Reaktion frei gesetzte Wärmemenge zu steuern. Aus herstellungstechnischen und Kostengründen bevorzugt sind davon Ausführungsformen, bei denen jedes Salz auf eigenen Träger(partikel)n aufgebacht ist. Und besonders bevorzugt sind in aller Regel jene Ausführungsformen, in denen nur ein einziges Übergangsmetallsalz zum Einsatz kommt.

Das Trägermaterial ist als solches nicht speziell eingeschränkt, solange es unter den gewählten Reaktionsbedingungen chemisch und thermisch inert ist. Aus Gründen der Verfügbarkeit und Kosten ist es vorzugsweise aus Vermiculit, porösen Alumosilikaten und Zeolithen, noch bevorzugter aus Zeolithen und expandiertem Vermiculit, ausgewählt, wobei aufgrund der großen Auswahl an einsetzbaren Modifikationen insbesondere Zeolithe bevorzugt werden.

Weiters wird in bevorzugten Ausführungsformen ein teilchenförmiges Trägermaterial mit einer Korngröße von 0,1 bis 5 mm, noch bevorzugter 0,5 bis 3 mm, insbesondere 1 bis 2 mm, eingesetzt, da Teilchenmaterial einerseits einfacher handzuhaben ist als beispielsweise Pellets oder gar größere Stücke des Trägers. So kann etwa eine Schüttung einfach über Rutschen transportiert werden, und feinteiliges, z.B. pulverförmiges, Material mit Korngrößen unter etwa 2 mm kann unter Verwendung eines Gebläses befördert und mittels Trichtern gesammelt werden. Vor allem aber kann pulverförmiges Material in Wirbelschichtreaktoren umgesetzt werden, was den apparativen Aufwand reduziert, die Umsätze erhöht und die Haltbarkeit des Materials verlängert. Zudem kann regeneriertes Material mit Sieben klassiert werden, um reproduzierbare Reaktionsbedingungen zu schaffen. Darüber hinaus weisen feine Körner eine große relative Oberfläche auf, weswegen sie mit höheren Anteilen an Übergangsmetallsalz beladen werden können.

Das Trägermaterial weist gemäß vorliegender Erfindung vorzugsweise eine Beladung mit dem Übergangsmetallsalz - ausgedrückt als Gewicht des Übergangsmetallsalzes bezogen auf das Trägergewicht - von etwa 10 bis 70 Gew.-% auf. Diese hängt unter anderem von der Bildungsenthalpie der jeweiligen Amminkomplexe, von den apparativen Gegebenheiten, etwa vom Anwendungszweck der exothermen Reaktion, sowie von der Art und Menge der zur Verfügung stehenden Abwärme für die Zersetzung der Komplexe ab. Bei einer deutlich höheren Beladung als 70 Gew.-% besteht mitunter dennoch die Gefahr des Agglomerierens durch Schmelzvorgänge, da das Teilchen dann großteils aus dem Salz aufgebaut ist, während Beladungen unter 10 Gew.-% unwirtschaftlich sein können. Letzteres gilt auch für die Herstellung von sehr hohen Beladungen, z.B. von über 80 Gew.-%. Als erfindungsgemäß bevorzugt haben sich bislang Beladungen zwischen etwa 35 und etwa 65 Gew.-%, noch bevorzugter zwischen etwa 40 und etwa 60 Gew.-%, erwiesen.

In einem zweiten Aspekt offenbart die vorliegende Erfindung auch die Verwendung von Amminkomplexen von Übergangsmetallsalzen zur thermochemischen Energiespeicherung, indem zur Speicherung und Wiederfreisetzung der Energie chemische Gleichgewichtsreaktionen der Amminkomplexe von Übergangsmetallsalzen durchgeführt werden, mit dem Kennzeichen, dass
a) Amminkomplexe von Übergangsmetallsalzen gemäß der folgenden reversiblen Summenreaktionen gebildet und zersetzt werden:

   [Me(NH₃)ₙ]X + ΔH_{R} ⇄ MeX + n NH₃

   oder in alternativer Schreibweise:

   MeX.nNH₃ + ΔH_{R} ⇄ MeX + n NH₃

   worin Me für zumindest ein Übergangsmetallion und X für ein oder mehrere Gegenionen in einer zur Neutralisierung des Komplexes ausreichenden Menge, entsprechend ihrer Wertigkeit und jener des Übergangsmetallions, steht; und
b) ein oder mehrere Übergangsmetallsalze auf einem gegenüber der Reaktion inerten Trägermaterial eingesetzt werden.

Die bevorzugten Optionen für diese erfindungsgemäße Verwendung sind natürlich dieselben wie für das obige Verfahren gemäß dem ersten Aspekt der Erfindung offenbart.

### KURZBESCHREIBUNG DER ZEICHNUNGEN

Die Erfindung wird nachstehend anhand von konkreten Ausführungsbeispielen unter Bezugnahme auf die beiliegenden Zeichnungen detallierter beschrieben, wobei Letztere Folgendes zeigen.
Fig. 1 zeigt eine Fotografie des in den Beispielen und Vergleichsbeispielen eingesetzten Wirbelschichtreaktors.
Fig. 2 zeigtden Temperaturverlauf der Amminkomplexbildungsreaktion von Vergleichsbeispiel 1.
Fig. 3 zeigt den Temperaturverlauf der Amminkomplexbildungsreaktion von Beispiel 1.
Fig. 4 zeigt den Temperaturverlauf der Amminkomplexbildungsreaktion von Vergleichsbeispiel 2.
Fig. 5 zeigt den Temperaturverlauf der Amminkomplexbildungsreaktion von Beispiel 2.
Fig. 6 zeigt den Temperaturverlauf der Amminkomplexbildungsreaktion von Beispiel 3.
Fig. 7 zeigt den Temperaturverlauf von Zyklen von Amminkomplexbildungsreaktion und Amminkomplexzersetzungsreaktion von Beispiel 7.

### BEISPIELE

Alle in den nachstehenden Beispielen eingesetzten Reagenzien sind kommerziell erhältlich und wurden ohne weitere Reinigung eingesetzt. Der verwendete Zeolith Y wies eine Teilchengröße von rund 2 mm und der expandierte Vermiculit eine Teilchengröße von etwa 2 bis 3 mm auf. Beide Träger wurden genau wie sämtliche Übergangsmetallsalze von Sigma Aldrich bezogen.

Die Röntgenfluoreszenz- (RFA-) Analysen zur Bestimmung der in den Synthesebeispielen erhaltenen Trägerbeladungen wurden auf einem Axios RFA-Gerät von Panalytical durchgeführt, und Simultanthermoanalyse- (STA-) Messungen zur Bestimmung der Wärmespeicherkapazität wurden auf einer einer Jupiter® STA 449 F1 von Netzsch durchgeführt.

### Synthesebeispiel 1

In einem typischen Loading-Experiment wurden 50 g Zeolith Y, der zuvor 6 h lang bei 400 °C getrocknet worden war, für 2 h in eine gesättigte CuSO₄-Lösung getaucht und so damit getränkt. Anschließend wurde das bläuliche Produkt abgetrennt, mit 200 ml entionisiertem Wasser nachgewaschen und 12 h lang bei 60 °C und danach 6 h lang bei 350 °C getrocknet. Mittels RFA-Analyse wurde ein CuSO₄-Gehalt von 39,7 Gew.-% bestimmt.

### Synthesebeispiel 2

Analog zu Synthesebeispiel 1 wurde Zeolith Y mit gesättigter CuCl₂-Lösung getränkt. Mittels RFA-Analyse wurde ein CuCl₂-Gehalt von 44,3 Gew.-% bestimmt.

### Synthesebeispiel 3

Analog zu Synthesebeispiel 1 wurde Zeolith Y mit gesättigter CdCl₂-Lösung getränkt. Mittels RFA-Analyse wurde ein CdCl₂-Gehalt von 59,5 Gew.-% bestimmt.

### Svnthesebeispiel 4

Analog zu Synthesebeispiel 1 wurde anstelle von Zeolith Y expandierter Vermiculit mit gesättigter CuSO₄-Lösung getränkt. Mittels RFA-Analyse wurde ein CuSO₄-Gehalt von 58,4 Gew.-% bestimmt.

### Synthesebeispiel 5

Analog zu Synthesebeispiel 4 wurde expandierter Vermiculit mit gesättigter CuCl₂-Lösung getränkt. Mittels RFA-Analyse wurde ein CuCl₂-Gehalt von 57,8 Gew.-% bestimmt.

### Svnthesebeispiel 6

Analog zu Synthesebeispiel 4 wurde expandierter Vermiculit mit gesättigter CdCl₂-Lösung getränkt. Mittels RFA-Analyse wurde ein CdCl₂-Gehalt von 61,3 Gew.-% bestimmt.

### Beispiele 1 bis 6 und Vergleichsbeispiele 1 bis 9

Sowohl reine Pulver der Übergangsmetallsalze als auch die in den Synthesebeispielen hergestellten, mit dem jeweiligen Übergangsmetallsalz beladenen Träger wurden als Wärmespeichermedien in einem erfindungsgemäßen Verfahren zur Speicherung thermischer Energie eingesetzt.

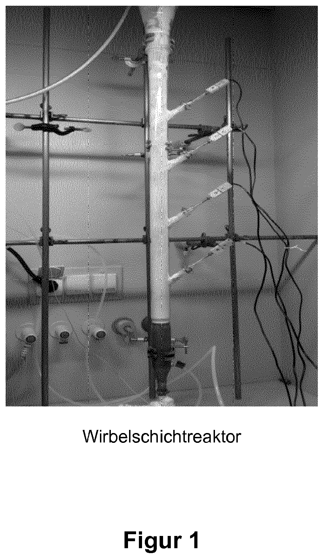

Dazu wurde zunächst das jeweilige Metallsalzpulver (Vergleichsbeispiele 1 bis 4) bzw. das beladene Trägermaterial der Synthesebeispiele 1 bis 6 (Beispiele 1 bis 6) bei Raumtemperatur in einem Wirbelschichtreaktor vorgelegt, und in der Folge wurde das feste Material jeweils etwa 15 min lang mit einem Strom von 10 l/min NH₃ als reaktivem Trägergas sowohl fluidisiert als auch gleichzeitig zum jeweiligen Amminkomplex umgesetzt, wobei die sich aufgrund der exothermen Reaktion einstellende Temperatur im Reaktorinneren mittels Temperaturfühlern auf unterschiedlichen Höhen des Reaktors kontinuierlich gemessen wurde. Fig. 1 zeigt eine Fotografie des eingesetzten Wirbelschichtreaktors. Die Schüttung des Teilchenbetts erreichte vor der Fluidisierung in allen Fällen eine Höhe knapp oberhalb des untersten Thermofühlers.

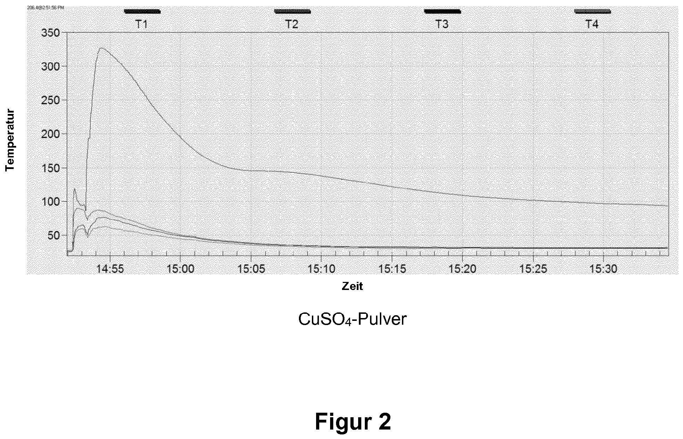

In den Fig. 2 bis 6 werden die gemessenen Temperaturverläufe der Amminkomplex-Bildungsreaktionen für die Beispiele 1 bis 3 und die Vergleichsbeispiele 1 und 2 gezeigt, wobei T1 jeweils die Messkurve des untersten und T4 jene des obersten Temperaturfühlers darstellt. Nachvollziehbarerweise wurde in allen Fällen die höchste Temperatur am untersten Thermofühler gemessen, da das fluidisierte Teilchenbett dort früher mit dem Reaktivgas NH₃ in Kontakt kam als in größerer Höhe und das Bettmaterial aufgrund der Fluidisierung unmittelbar durchmischt wurde, so dass derartige Temperaturen in größerer Höhe nicht mehr erreicht werden konnten. Für Vergleichszwecke ist daher durchwegs die der obersten der vier Temperaturkurven entsprechende Temperatur des untersten Thermofühlers T1 heranzuziehen.

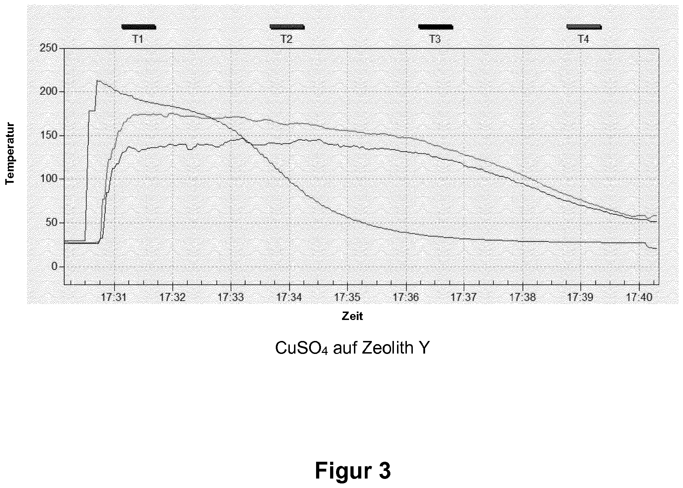

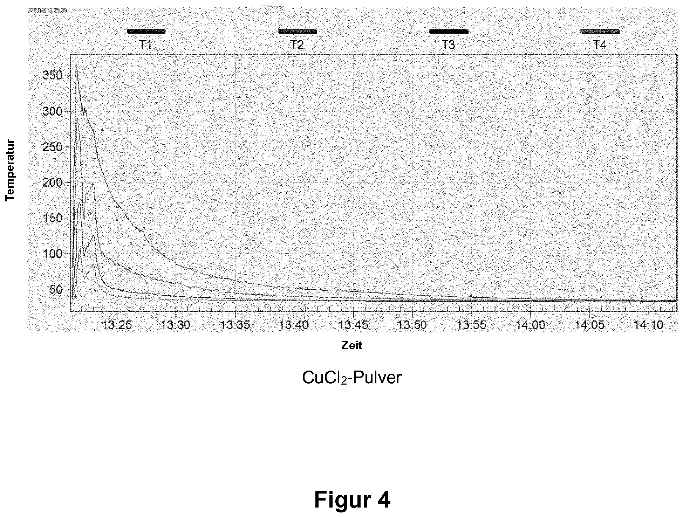

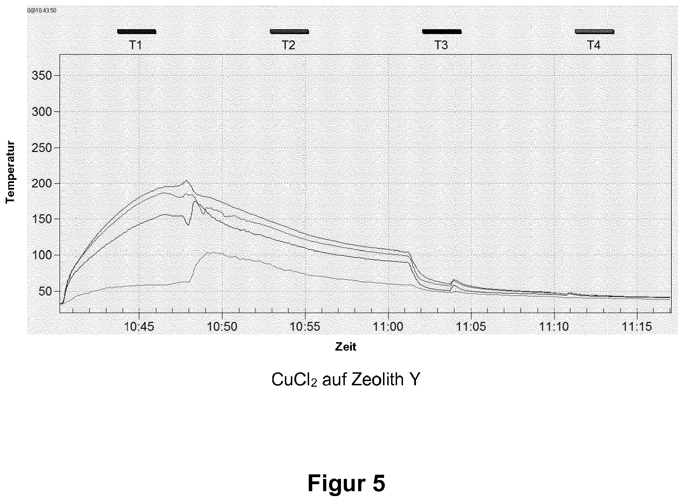

Aus einem Vergleich zwischen Fig. 2 und Fig. 3, d.h. zwischen reinem CuSO₄-Pulver (ohne Träger) aus Vergleichsbeispiel 1 und CuSO₄ auf Zeolith Y aus Beispiel 1, geht hervor, dass die mit dem auf Zeolith getragenen Salz erreichte Maximaltemperatur mit etwa 215 °C deutlich niedriger war als jene, die mit dem reinen CuSO₄-Pulver erzielt wurde (etwa 330 °C). Dasselbe folgt aus einem Vergleich der Fig. 4 und 5, in denen die Kurven von reinem CuCl₂-Pulver (ohne Träger) aus Vergleichsbeispiel 2 und CuCl₂ auf Zeolith Y aus Beispiel 2 dargestellt sind. Das reine Pulver bewirkt bei der Reaktion mit NH₃ eine Temperaturerhöhung im Reaktorinneren auf etwa 365 °C, während durch die "Verdünnung" auf dem Zeolithträger eine Temperatur von "nur" etwa 203 °C erreicht wurde. Nichtsdestotrotz ist die dabei frei gesetzte Wärmemenge natürlich dennoch für diverse Anwendungen nutzbar, indem definierte Mengen an Übergangsmetallsalz und Ammoniak voneinander getrennt aufbewahrt und bei Bedarf miteinander vermischt werden, um die Wärme freizusetzen.

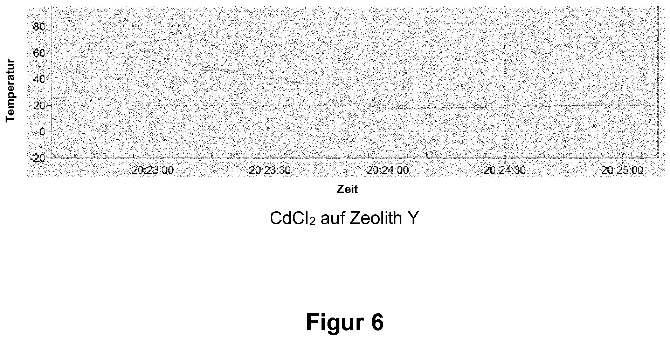

In Fig. 6 ist der Temperaturverlauf für auf Zeolith getragenes CdCl₂ bei Reaktion mit Ammoniak dargestellt, wobei eine Temperatur von etwa 74 °C erreicht wurde, während bei reinem CdCl₂-Pulver die Temperatur auf etwa 174 °C anstieg (Daten nicht dargestellt).

In nachstehender Tabelle 1 sind die in den Beispielen und Vergleichsbeispielen jeweils erreichten Temperaturen aufgelistet.

**Tabelle 1**

| **Beispiel** | **Wärmespeichermedium** | **Maximaltemperatur [°C]** |
|---|---|---|
| Vergleichsbeispiel 1 | CuSO₄ | 330 |
| Beispiel 1 | CuSO₄ auf Zeolith Y | 215 |
| Vergleichsbeispiel 2 | CuCl₂ | 365 |
| Beispiel 2 | CuCl₂ auf Zeolith Y | 203 |
| Vergleichsbeispiel 3 | CdCl₂ | 147 |
| Beispiel 3 | CdCl₂ auf Zeolith Y | 74 |
| Beispiel 4 | CuSO₄ auf Vermiculit | 245 |
| Beispiel 5 | CuCl₂ auf Vermiculit | 262 |
| Beispiel 6 | CdCl₂ auf Vermiculit | 65 |
| Vergleichsbeispiel 4 | CdSO₄ | 68 |

Weiters wurden mittels Simultanthermoanalyse (STA) die Energie- und die Massenzunahme der Materialien der Beispiele 1 bis 3 und der Vergleichsbeispiele 1 bis 3 bestimmt und daraus die frei werdenden und somit auch die spezifisch speicherbaren Energiemengen berechnet, wobei die in der umseitigen Tabelle 2 angeführten Werte erhalten wurden. Für die Vergleichsbeispiele 5 bis 9 wurden Werte aus der Literatur herangezogen.

**Tabelle 2**

| **Beispiel** | **Reaktion bzw. Material** | **speicherbare Energie [kJ/kg]** |
|---|---|---|
| Vergleichsbeispiel 1 | CuSO₄ + 4 NH₃ ⇄ CuSO₄.4NH₃ | 1622 |
| Beispiel 1 | CuSO₄ auf Zeolith Y | 217 |
| Vergleichsbeispiel 2 | CuCl₂ + 5 NH₃ ⇄ CUCl₂.5NH₃ | 2217 |
| Beispiel 2 | CuCl₂ auf Zeolith Y | 188 |
| Vergleichsbeispiel 3 | CdCl₂ + 5 NH₃ ⇄ CdCl₂.5NH₃ | 1425 |
| Beispiel 3 | CdCl₂ auf Zeolith Y | 178 |
| Vergleichsbeispiel 5 | MnCl₂.2NH₃ + 4 NH₃ ⇄ MnCl₂.6NH₃ | 296 |
| Vergleichsbeispiel 6 | FeCl₂.2NH₃ + 4 NH₃ ⇄ FeCl₂.6NH₃ | 319 |
| Vergleichsbeispiel 7 | CoCl₂.2NH₃ + 4 NH₃ ⇄ CoCl₂.6NH₃ | 329 |
| Vergleichsbeispiel 8 | NiCl₂.2NH₃ + 4 NH₃ ⇄ NiCl₂.6NH₃ | 362 |
| Vergleichsbeispiel 9 | CaCl₂.4NH₃ + 4 NH₃ ⇄ CaCl₂.8NH₃ | 229 |

Man erkennt, dass die auf Träger aufgebrachten Übergangsmetallsalze vergleichbare Wärmemengen freisetzen, die nur wenig unterhalb jenen liegen, die nach dem Stand der Technik durch Zyklisierung von Übergangsmetallsalz-Amminkomplexen zwischen unterschiedlichen Koordinationszahlen verfügbar werden. Geichzeitig sind jedoch die gemäß vorliegender Erfindung auf Trägern aufgebrachten Salze vor Agglomeration aufgrund von Schmelzvorgängen gefeit.

Die in den obigen Reaktionen mit Ammoniak erhaltenen Amminkomplexe - als Pulver oder auf Träger - wurden in der Folge durch Erhitzen mit einem 400 °C heißen Luftstrom im Wirbelschichtreaktor thermisch zersetzt, wobei die am untersten Thermofühler gemessenen Zersetzungstemperaturen notiert wurden, die in der umseitigen Tabelle 3 aufgelistet sind.

**Tabelle 3**

| **Beispiel** | **Reaktion bzw. Material** | **Zers.temperatur [°C]** |
|---|---|---|
| Vergleichsbeispiel 1 | CuSO₄.4NH₃ ⇄ CuSO₄ + 4 NH₃ | < 400 |
| Beispiel 1 | C_{U}SO₄.4NH₃ auf Zeolith Y | < 400 |
| Vergleichsbeispiel 2 | CuCl₂.5NH₃ ⇄ CuCl₂ + 5 NH₃ | < 300 |
| Beispiel 2 | CUCl₂.5NH₃ auf Zeolith Y | < 300 |
| Vergleichsbeispiel 3 | CdCl₂.5NH₃ ⇄ CdCl₂ + 5 NH₃ | < 400 |
| Beispiel 3 | CdCl₂.5NH₃ auf Zeolith Y | < 400 |

Aus Tabelle 3 ist zu erkennen, dass sich die Zersetzungstemperaturen durch die Aufbringung auf ein Trägermaterial nicht signifikant verändern.

### Beispiel 7

Überraschenderweise haben die Erfinder bei den Experimenten mit Cadmiumchlorid festgestellt, dass sich dessen Pentamminkomplex nicht nur thermisch, sondern auch durch einfaches Spülen mit Luft mit Raumtemperatur zersetzen ließ, so dass zur Regeneration des unkomplexierten Salzes kein hoher Energieaufwand erforderlich war.

In der Folge wurden im Wirbelschichtreaktor Zyklenversuche durchgeführt, bei denen abwechselnd NH₃ und Luft mit Raumtemperatur zur Fluidisierung des Bettmaterials, CdCl₂ auf Zeolith Y als Träger, sowie gleichzeitig zur Bildung und reversiblen Zersetzung des Amminkomplexes gemäß nachstehender Reaktionsgleichung eingesetzt wurden:

CdCl₂ + 5 NH₃ ⇄ CdCl₂.5NH₃

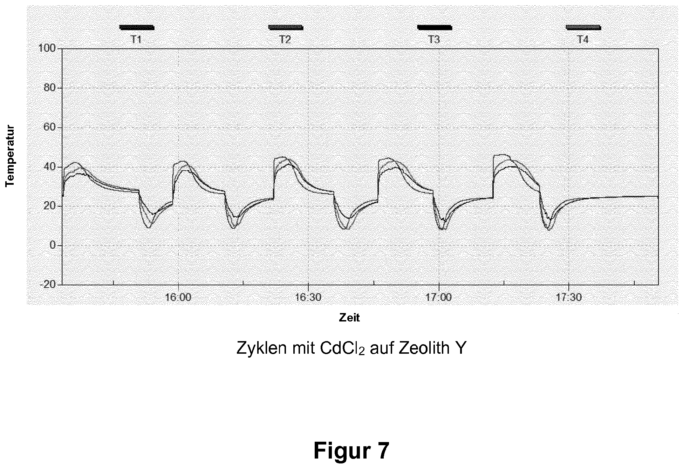

Fig. 7 zeigt den Temperaturverlauf dieser Zyklen.

Cadmiumchlorid stellt dadurch ein besonders vielversprechendes Material für den zukünftigen Einsatz als thermochemisches Wärmespeichermedium dar.

Zusätzliche Beispiele, u.a. mit CdSO₄ und anderen Übergangsmetallsulfaten, sind derzeit Gegenstand weiterer Versuche der Erfinder.

Die Erfindung stellt somit ein Verfahren bereit, durch das relativ große Energiemengen in Form von chemischer Energie in auf einem festen Träger aufgebrachten Übergangsmetallsalzen gespeichert und durch Reaktion mit Ammoniak spontan wieder freigesetzt werden können, ohne dass es zu Verklumpung aufgrund von teilweisem Schmelzen oder zur irreversibler Zersetzung der Salze kommen kann.

## Patentansprüche

1. Verfahren zur thermochemischen Energiespeicherung mittels Durchführung reversibler chemischer Reaktionen zur Speicherung von Wärmeenergie in Form von chemischer Energie in einer oder mehreren chemischen Verbindungen zur späteren erneuten Freisetzung in Form von Wärmeenergie unter Nutzung von chemischen Gleichgewichtsreaktionen, wobei zur Speicherung und Wiederfreisetzung der Energie Gleichgewichtsreaktionen von Amminkomplexen von Übergangsmetallsalzen durchgeführt werden,
**dadurch gekennzeichnet, dass**
a) Amminkomplexe von Übergangsmetallsalzen gemäß der folgenden reversiblen Summenreaktionen gebildet und zersetzt werden:
[Me(NH₃)ₙ]X + ΔH_{R} ⇄ MeX + n NH₃
worin Me für zumindest ein Übergangsmetallion und X für ein oder mehrere Gegenionen in einer zum Ladungsausgleich des Komplexes ausreichenden Menge, entsprechend ihrer Wertigkeit und jener des Übergangsmetallions, stehen; und
b) ein oder mehrere Übergangsmetallsalze auf einem gegenüber der Reaktion inerten Trägermaterial eingesetzt werden.

2. Verfahren nach Anspruch 1, **dadurch gekennzeichnet, dass** das zumindest eine Übergangsmetall aus Mn, Fe, Co, Ni, Cu und Cd ausgewählt ist.

3. Verfahren nach Anspruch 2, **dadurch gekennzeichnet, dass** das zumindest eine Übergangsmetall aus Cu und Cd, insbesondere Cd, ausgewählt ist.

4. Verfahren nach einem der Ansprüche 1 bis 3, **dadurch gekennzeichnet, dass** als Gegenionen X ein Sulfation SO₄²⁻ oder zwei Chloridionen Cl⁻ eingesetzt werden.

5. Verfahren nach Anspruch 4, **dadurch gekennzeichnet, dass** als Übergangsmetallsalz CuSO₄ oder CdCl₂ eingesetzt wird.

6. Verfahren nach einem der Ansprüche 1 bis 5, **dadurch gekennzeichnet, dass** das Trägermaterial aus Vermiculit, porösen Alumosilikaten und Zeolithen ausgewählt ist.

7. Verfahren nach Anspruch 6, **dadurch gekennzeichnet, dass** als Trägermaterial ein Zeolith oder expandierter Vermiculit eingesetzt wird.

8. Verfahren nach einem der Ansprüche 1 bis 7, **dadurch gekennzeichnet, dass** ein teilchenförmiger Träger mit einer Korngröße von 0,1 bis 5 mm, vorzugsweise 0,5 bis 3 mm, insbesondere 1 bis 2 mm, eingesetzt wird.

9. Verfahren nach einem der Ansprüche 1 bis 8, **dadurch gekennzeichnet, dass** das Trägermaterial eine Beladung mit dem Übergangsmetallsalz von etwa 10 bis etwa 70 Gew.-%, noch bevorzugter etwa 35 bis etwa 65 Gew.-%, insbesondere etwa 40 bis etwa 60 Gew.-%, aufweist.

10. Verwendung von Amminkomplexen von Übergangsmetallsalzen zur thermochemischen Energiespeicherung in einem Verfahren nach einem der Ansprüche 1 bis 9.

## Claims

1. A method for thermochemical energy storage by carrying out reversible chemical reactions for the storage of heat energy in the form of chemical energy in one or more chemical compounds for later re-release in the form of heat energy using chemical equilibrium reactions, wherein equilibrium reactions of ammine complexes of transition metal salts are carried out for said storage and re-release of the energy, **characterized in that**
a) ammine complexes of transition metal salts are formed and decomposed according to the following reversible total reactions:
[Me(NH₃)ₙ]X + ΔHR ⇄ MeX + n NH₃
wherein Me represents at least one transition metal ion and X represents one or more counterion(s) in a quantity sufficient for charge equalizing the complex, according to the valence thereof and that of the transition metal ion; and
b) one or more transition metal salt(s), carried on a carrier material that is inert with regard to the reaction, is/are used.

2. The method according to claim 1, **characterized in that** the at least one transition metal is selected from Mn, Fe, Co, Ni, Cu, and Cd.

3. The method according to claim 2, **characterized in that** the at least one transition metal is selected from Cu and Cd, most preferably Cd.

4. The method according to any one of claims 1 to 3, **characterized in that** one sulfate ion SO₄²⁻ or two chloride ions Cl⁻ are used as the counterion(s) X.

5. The method according to claim 4, **characterized in that** CuSO₄ or CdCl₂ is used as the transition metal salt.

6. The method according to any one of claims 1 to 5, **characterized in that** the carrier material is selected from vermiculite, porous aluminium silicates, and zeolites.

7. The method according to claim 6, **characterized in that** a zeolite or an expanded vermiculite is used as the carrier material.

8. The method according to any one of claims 1 to 7, **characterized in that** a particulate carrier having a grain size of 0.1 to 5 mm, preferably 0.5 to 3 mm, most preferably 1 to 2 mm, is used.

9. The method according to any one of claims 1 to 8, **characterized in that** the carrier material is loaded with about 10 to about 70 wt%, more preferably about 35 to about 65 wt%, most preferably about 40 to about 60 wt%, of the transition metal salt.

10. A use of ammine complexes of transition metal salts for thermochemical energy storage in the method according to any one of claims 1 to 9.

## Revendications

1. Procédé de stockage d'énergie thermochimique en effectuant des réactions chimiques réversibles pour stocker l'énergie thermique sous forme d'énergie chimique dans un ou plusieurs composés chimiques pour la libérer à nouveau ultérieurement sous forme d'énergie thermique en utilisant des réactions d'équilibre chimique, des réactions d'équilibre de complexes d'ammine de sels de métaux de transition étant effectuées pour stocker et libérer l'énergie,
**caractérisé en ce que**
a) les complexes amminiques de sels de métaux de transition sont formés et décomposés selon les réactions réversibles suivantes
[Me(NH3)n]X + ΔHR ⇄ MeX + n NH₃
dans lesquelles Me est au moins un ion de métal de transition et X est un ou plusieurs contre-ions en quantité suffisante pour équilibrer la charge du complexe en fonction de leur valence et de celle de l'ion de métal de transition; et
b) un ou plusieurs sels de métaux de transition sont utilisés sur un matériau de support inerte à la réaction.

2. Procédé selon la revendication 1, **caractérisé en ce que** ledit au moins un métal de transition est choisi parmi Mn, Fe, Co, Ni, Cu et Cd.

3. Procédé selon la revendication 2, **caractérisé en ce que** ledit au moins un métal de transition est choisi parmi Cu et Cd, en particulier Cd.

4. Procédé selon l'une des revendications 1 à 3, **caractérisé en ce qu'**un ion sulfate 80₄²⁻ ou deux ions chlorure Cl⁻ est/sont utilisés comme contre-ions X.

5. Procédé selon la revendication 4, **caractérisé en ce que** le CuSO₄ ou le CdCl₂ est utilisé comme ledit sel de métal de transition.

6. Procédé selon l'une des revendications 1 à 5, **caractérisé en ce que** le matériau de support est choisi parmi la vermiculite, les aluminosilicates poreux et les zéolites.

7. Procédé selon la revendication 6, **caractérisé en ce que** le matériau de support utilisé est une zéolite ou une vermiculite expansée.

8. Procédé selon l'une des revendications 1 à 7, **caractérisé en ce qu'**un support particulaire ayant une granulométrie de 0,1 à 5 mm, de préférence de 0,5 à 3 mm, en particulier de 1 à 2 mm, est utilisé.

9. Procédé selon l'une des revendications 1 à 8, **caractérisé en ce que** le matériau de support présente une charge dudit sel de métal de transition d'environ 10 à environ 70 % en poids, de préférence d'environ 35 à environ 65 % en poids, en particulier d'environ 40 à environ 60 % en poids.

10. Utilisation de complexes d'ammine de sels de métaux de transition pour le stockage d'énergie thermochimique dans un procédé selon l'une des revendications 1 à 9.
